# EUROPÄISCHE PATENTSCHRIFT

(11) **EP 4 212 839 B1**
(45) Veröffentlichungstag und Bekanntmachung des Hinweises auf die Patenterteilung: **22.04.2026**
(21) Anmeldenummer: 22151484.7
(22) Anmeldetag: 14.01.2022
(51) Int. Cl.: G01K 1/024

(54) **BATTERIEBETRIEBENES SPEISENTHERMOMETER UND HERSTELLUNGSVERFAHREN**
BATTERY-POWERED FOOD THERMOMETER AND PRODUCTION METHOD
THERMOMÈTRE ALIMENTAIRE FONCTIONNANT SUR BATTERIE ET ??PROCÉDÉ DE FABRICATION

(43) Veröffentlichungstag der Anmeldung: 19.07.2023
(73) Patentinhaber: Vorwerk & Co. Interholding GmbH, 42275 Wuppertal (DE)
(72) Erfinder: Stein, Matthias, Dr., 45472 Mühlheim an der Ruhr (DE); Serndt, Mirco, 42555 Velbert (DE); Sauerwald, Andres, Dr., 46238 Bottrop (DE); Isenberg, Gerhard, 50668 Köln (DE)
(74) Vertreter: Gille Hrabal Partnerschaftsgesellschaft mbB Patentanwälte

(56) Entgegenhaltungen:
- EP-A1- 3 855 142
- WO-A1-2012/119725
- DE-A1- 102004 047 756
- US-A1- 2020 129 006

## Beschreibung

Die Erfindung betrifft ein Speisenthermometer mit einer Batterie. Die Erfindung betrifft außerdem ein Verfahren zur Herstellung eines Speisenthermometers.

Ein Speisenthermometer ist ein Temperaturmessgerät, welches dafür bestimmt und geeignet ist, Temperaturen in einem Nahrungsmittel bzw. Lebensmittel während seiner Zubereitung zu messen. Ein Speisenthermometer kann daher Temperaturen messen, die bei der Zubereitung einer Speise auftreten können. Deutlich davon abweichende Temperaturen können nicht gemessen werden. Außerdem ist ein Speisenthermometer den Umgebungsbedingungen gewachsen, die während einer Zubereitung einer Speise auftreten können. Speisenthermometer sind beispielsweise aus WO 2012/119725 A1 und EP 3 855 142 A1 aus dem Stand der Technik bekannt.

In der Regel werden bei der Zubereitung einer Speise Temperaturen von weniger als 200°C erreicht. Es können aber auch Temperaturen von 350°C erreicht werden, so zum Beispiel für das Backen einer Pizza. Temperaturen von mehr als 350°C werden grundsätzlich nicht überschritten. Ein Speisenthermometer im Sinne der vorliegenden Erfindung ist daher so eingerichtet, dass Temperaturen oberhalb von 400°C, vorzugsweise oberhalb von 300°C, besonders bevorzugt oberhalb von 250°C, nicht mehr gemessen werden können. Grundsätzlich ist das Speisenthermometer so eingerichtet, dass dieses in einem herkömmlichen Backofen eingesetzt werden kann, also bei Temperaturen von bis zu 250°C oder 220°C.

Ein Speisenthermometer im Sinne der vorliegenden Erfindung ist nicht so ausgelegt, dass sehr tiefe Temperaturen damit gemessen werden können wie zum Beispiel Temperaturen deutlich unterhalb von Minustemperaturen, wie diese in haushaltsüblichen Gefriertruhen oder Gefrierschränken erreicht werden. Ein Speisenthermometer im Sinne der vorliegenden Erfindung ist daher nicht so ausgelegt, dass es Temperaturen von weniger als -70°C messen kann. Grundsätzlich ist ein Speisenthermometer im Sinne der vorliegenden Erfindung so ausgelegt, dass es Temperaturen unterhalb von -50°C nicht mehr messen kann, weil Speisen in der Regel unter Zufuhr von Wärme hergestellt werden und sehr tiefe Temperaturen lediglich für ein Einfrieren einer Speise angewendet werden.

Ein Speisenthermometer im Sinne der vorliegenden Erfindung kann einer Dampfatmosphäre widerstehen. Ein Speisenthermometer ist daher grundsätzlich wasserdicht gekapselt. Ein Speisenthermometer im Sinne der vorliegenden Erfindung ist resistent gegenüber üblichen Zutaten einer Speise wie zum Beispiel Säure von Zitronen oder Essig.

Ein Speisenthermometer gemäß der vorliegenden Erfindung ist dafür bestimmt und geeignet, in Gargut hineingestochen zu werden, um eine Temperatur im Inneren des Garguts messen zu können. Ein Speisenthermometer kann dafür einen langgestreckten Messfühler mit einem spitzen oder zumindest einem sehr dünnen Ende aufweisen, um den Messfühler auch in relativ feste Nahrung wie Fleisch hineinstechen zu können. Der Messfühler umfasst einen Sensor, mit dem eine Temperatur gemessen werden kann. Ein Speisenthermometer kann ein Griffteil aufweisen, das nicht dafür bestimmt und geeignet ist, in die Speise hineingesteckt zu werden. Das Griffteil kann von einem Benutzer ergriffen werden, um das Speisenthermometer aus einer Nahrung bzw. Speise wieder herausziehen zu können. Das Griffteil kann ebenfalls einen Sensor umfassen, mit dem eine Temperatur gemessen werden kann. Es kann dann auch die Umgebungstemperatur außerhalb einer Nahrung bzw. Speise gemessen werden.

Ein Speisenthermometer im Sinne der vorliegenden Erfindung benötigt für seinen Betrieb elektrischen Strom. Das Speisenthermometer umfasst deshalb eine Batterie, also einen Speicher für elektrische Energie. Durch den Speicher kann der elektrische Strom zur Verfügung gestellt werden, der für den Betrieb des Speisenthermometers benötigt wird. Die Batterie ist grundsätzlich eine aufladbare Batterie.

Folgende Anforderungen und Probleme sind bei einem solchen Speisenthermometer zu beachten. Eine Batterie ist ein temperaturempfindliches Bauteil, das daher auch aus Sicherheitsgründen gut vor übermäßiger Hitze zu schützen ist. Bei einem Speisenthermometer, welches in Gargut hineingestochen wird, bleibt der Bereich am längsten vergleichsweise kühl, der sich innerhalb des Garguts befindet. In einem erhitzten Speisenzubereitungsraum wirkt Gargut nämlich wie ein thermischer Isolator. Es ist daher von Vorteil, die Batterie in diesem Bereich anzuordnen. Der Bereich, der in Gargut hineingestochen wird, muss aber möglichst dünn sein, um das Speisenthermometer ohne großen Kraftaufwand in ein Gargut hineinstechen zu können. Daher muss bei der Batterie auf eine besonders schlanke Bauweise geachtet werden, wenn diese in dem Bereich angeordnet werden soll, der in ein Gargut hineingesteckt werden soll.

Mit der vorliegenden Erfindung wird das Ziel verfolgt, ein Speisenthermometer bereitzustellen, das den vorgenannten Anforderungen besonders gut gewachsen ist.

Zur Lösung der Aufgabe umfasst ein Speisenthermometer die Merkmale von Anspruch 1. Der Nebenanspruch betrifft ein Verfahren zur Herstellung des Speisenthermometers. Die abhängigen Ansprüche betreffen vorteilhafte Ausgestaltungen.

Die Aufgabe wird durch ein Speisenthermometer gelöst, das ein Gehäuse mit einem spitzen Ende umfasst. Das spitze Ende ist für eine Messung einer Temperatur in Inneren eines Garguts bestimmt und geeignet. Innerhalb des Gehäuses befindet sich eine Batterie. Die Batterie ist beim spitzen Ende des Speisenthermometers angeordnet. Der Abstand zwischen dem äußersten Ende der Spitze und der Batterie ist also gering und beträgt beispielsweise nicht mehr als 2 cm, bevorzugt nicht mehr als 1 cm. Die Batterie ist von einer Wärmeisolierung umhüllt, die sich zwischen dem Gehäuse und der Batterie befindet. Die Batterie wird zumindest zum Teil von der Wärmeisolierung abgedeckt.

Eine Batterie ist ein Bauteil, welches getrennt von anderen Komponenten des Speisenthermometers hergestellt wird. Eine Batterie umfasst grundsätzlich ein Gehäuse. Das Gehäuse kann aus Metall bestehen. Innerhalb des Gehäuses können sich Materialien befinden, durch die elektrische Energie elektrochemisch gespeichert werden kann. Es gibt zwei elektrische Leiter. Die elektrischen Leiter können durch eine Innenwand im Inneren des Gehäuses der Batterie hindurchgeführt sein. Die Batterie kann eine handelsübliche Batterie sein, die also eigenständig und unabhängig von einem Speisenthermometer im Handel erhältlich ist. Die Batterie ist insbesondere langgestreckt, um geeignet bei der Spitze untergebracht werden zu können.

Die Wärmeisolierung umhüllt die Batterie und verläuft daher dann um die Batterie herum. Die Wärmeisolierung kann dann also wie ein Röhrchen geformt sein. Vorzugsweise befindet sich die Batterie vollständig innerhalb der Wärmeisolierung, sodass auch die Stirnseiten der Batterie durch die Wärmeisolierung abgedeckt sind.

Es ist aber auch möglich, dass die Wärmeisolierung die Batterie nur zum Teil abdeckt. Beispielsweise kann die Wärmeisolierung gitterartig sein und daher die Batterie nur zum Teil abdecken. Die Wärmeisolierung könnte aus mehreren Elementen bestehen, die beispielsweise auf die Batterie aufgeklebt worden sind. Gibt es einen Abstand zwischen den Elementen, so deckt die Wärmeisolierung die Batterie nur zum Teil ab. Die Elemente können unterschiedlich sein. Es können ein oder mehrere erste Elemente vorhanden sein, die ein thermisch isolierendes Gas oder ein thermisch isolierendes Vakuum umfassen und dadurch thermisch isolieren. Es können ein oder mehrere zweite Elemente vorhanden sein, die ein Phasenwechselmaterial umfassen und dadurch thermisch isolieren. Wird eine Batterie nur zum Teil abgedeckt, so wird die Batterie dennoch grundsätzlich weit überwiegend abgedeckt. Grundsätzlich wird wenigstens 80% der Oberfläche der Batterie durch die Wärmeisolierung abgedeckt, vorzugsweise wenigstens 90%. Eine Wärmeisolierung, die die Oberfläche der Batterie vollständig, also zu 100%, abdeckt, ist zu bevorzugen.

Eine Wärmeisolierung im Sinne der Erfindung ist ein Material, welches besser vor Wärme zu schützen vermag als das an die Wärmeisolierung angrenzende Material. Die Wärmeleitfähigkeit der Wärmeisolierung kann beispielsweise geringer sein als die Wärmeleitfähigkeit der daran angrenzenden Materialien. Daran angrenzende ein oder mehrere Materialien können aus Metall bestehen. Daran angrenzende ein oder mehrere Materialien können aus Edelstahl bestehen. So können das Gehäuse des Speisenthermometers und/oder das Gehäuse der Batterie aus Metall wie zum Beispiel Edelstahl bestehen. An das wärmeisolierende Material kann dann an einer Seite das aus Metall bestehende Gehäuse des Speisenthermometers angrenzen und/oder an der anderen Seite das aus Metall bestehende Gehäuse der Batterie.

Eine zu hohe Temperatur kann eine Batterie zerstören. Eine Wärmeisolierung ist nicht erforderlich, um vor solchen zu hohen Temperaturen zu schützen. Daher werden bei Speisenthermometern Wärmeisolierungen zumindest dann nicht vorgesehen, wenn die Batterie bei einer Spitze eines Speisenthermometers angeordnet ist. Erstens schützt die Anordnung einer Batterie bei der Spitze eines Speisenthermometers vor Wärme, weil Gargut als Wärmeisolator wirkt, wenn die Spitze in das Gargut hineingesteckt ist. Zweitens muss das Thermometer bei der Spitze dünn sein, um in Gargut hineingestochen werden zu können, ohne übermäßig große Löcher im Gargut zu hinterlassen. Daher ist eine zusätzliche Wärmeisolierung ungünstig, weil dadurch der Durchmesser des Speisenthermometers im Bereich der Spitze vergrößert wird.

Eine Batterie ist Alterserscheinungen ausgesetzt. Es muss bei einem Speisenthermometer darauf geachtet werden, dass eine Batterie in einem Speisenthermometer über mehrere Jahre hinweg hinreichend elektrische Energie für den Betrieb des Speisenthermometers zur Verfügung stellen kann. Es muss also auch nach mehreren Jahren immer noch eine hinreichende Mindestkapazität vorhanden sein, damit das Speisenthermometer hinreichend lange Temperaturen während der Zubereitung von Speisen messen kann. Andernfalls könnte das Speisenthermometer bereits nach kurzer Zeit nicht mehr genutzt werden.

Die vorliegende Erfindung beruht auf der Erkenntnis, dass Alterungserscheinungen einer Batterie stark vermindert werden können, wenn die Batterie eines Speisenthermometers nicht nur bei der Spitze des Speisenthermometers angeordnet ist, sondern zusätzlich durch eine wärmeisolierende Schicht geschützt wird. Dies erlaubt es, eine Batterie mit relativ geringer Kapazität einzusetzen, die dafür vergleichsweise schlank sowie klein gebaut ist. Es kann also trotz der Wärmeisolierung erreicht werden, den Bereich bei der Spitze eines Speisenthermometers dünn bauen zu können. Dies erlaubt es auch, kleiner gebaute Batterien einzusetzen, selbst wenn diese in besonders temperaturempfindlicher Weise altern.

Als Batterie kann eine Li-Ionen Batterie eingesetzt sein oder aber bevorzugt eine Batterie mit einem Feststoff als Elektrolyt. Auch aus Sicherheitsgründen ist eine Batterie mit einem keramischen Elektrolyten zu bevorzugen. Es kann alternativ beispielsweise u. a aus Sicherheitsgründen ein Superkondensator als Batterie vorgesehen sein.

Die Wärmeisolierung kann durch ein Vakuum oder durch ein gut wärmeisolierendes Gas wie Argon oder Krypton bereitgestellt sein. Zwischen dem äußersten Ende der Spitze und der Batterie befindet sich dann grundsätzlich kein weiteres Bauteil des Speisenthermometers. Es kann ein an einer Innenwand der Spitze anliegender Temperatursensor vorhanden sein, der über die Batterie mit elektrischem Strom versorgt werden kann. In diesem Fall kann sich zwischen dem äußersten Ende der Spitze und der Batterie nur noch der Temperatursensor befinden.

Innerhalb des Thermometers gibt es im Fall von Vakuum oder einem wärmeisolierenden Gas eine Innenwand, die den Raum bei der Spitze luftdicht von dem sonstigen Innenraum des Speisenthermometers trennt. Im Innenraum bei der Spitze ist dann die Batterie angeordnet. Eine durch ein Gas oder ein Vakuum realisierte Wärmeisolierung ist vorteilhaft unempfindlich gegenüber Wärme. Es treten außerdem keine zerstörerisch wirkenden thermischen Spannungen aufgrund von Temperaturänderungen auf.

Die Innenwand kann aus Metall bestehen und mit dem Gehäuse beispielsweise verklebt sein. Die Innenwand kann aus einem Kunststoff oder Harz bestehen. Kunststoff bzw. Harz sind dann grundsätzlich so ausgewählt, dass diese Temperaturen von wenigstens 200°C oder 220°C widerstehen können und sich also beispielsweise nicht bei 200°C bzw. 220°C verflüssigen.

Die Wärmeisolierung kann durch ein Phasenwechselmaterial gebildet sein. Das Phasenwechselmaterial kann zusammen mit der Batterie in einem geschlossenen Raum untergebracht sein, der sich bei der Spitze befindet und/oder in der Spitze vorhanden ist. Das Phasenwechselmaterial kann dann eine Flüssigkeit sein, die durch Zufuhr von Wärme verdampft wird und so ihre Phase verändert. Das Phasenwechselmaterial kann als Paste vorliegen. Die Wärmeisolierung kann aus einer Kombination aus Phasenwechselmaterial und einem Vakuum oder aus einer Kombination aus Phasenwechselmaterial und einem wärmeisolierenden Gas bestehen. Die Wärmeisolierung kann so weiter verbessert werden. Der Bauraum dafür benötigte Bauraum kann klein gehalten werden.

Die Wärmespeicherfähigkeit des Phasenwechselmaterials ist vorzugsweise möglichst groß, um lange eine hinreichend große Kühlwirkung erzielen zu können.

Die Phasenwechseltemperatur, bei der der Phasenwechsel stattfindet, liegt unterhalb der maximal möglichen Betriebstemperatur des Speisenthermometers, da andernfalls kein Phasenwechsel stattfinden kann. Die Phasenwechseltemperatur ist grundsätzlich so ausgewählt, dass diese sich unterhalb der Temperatur befindet, der die Batterie während des Entladens maximal ausgesetzt sein soll. Die Phasenwechseltemperatur ist vorzugsweise so ausgewählt, dass diese geringer ist als die maximale Ladetemperatur der Batterie, um die Batterie besonders schnell aufladen zu können. Längere Ladezeiten können so vorteilhaft vermieden werden. Die Phasenwechseltemperatur sollte daher nicht mehr als 70°C, bevorzugt nicht mehr als 60°C, betragen. Die Phasenwechseltemperatur ist außerdem so ausgewählt, dass diese oberhalb von üblichen Lagertemperaturen liegt. Die Phasenwechseltemperatur liegt daher grundsätzlich oberhalb von üblichen Raumtemperaturen. Die Phasenwechseltemperatur sollte wenigstens 30°C, bevorzugt wenigstens 40°C, betragen. Die Phasenwechseltemperatur, bei der die Phase wechselt, sollte aus vorgenannten Gründen zwischen 40°C und 53°C liegen.

Vorzugsweise weist das Phasenwechselmaterial einen Abstand zum Gehäuse des Speisenthermometers auf. Es verbleibt dann beispielsweise ein mit Luft gefüllter Spalt zwischen dem Phasenwechselmaterial und dem Gehäuse. Der Spalt ist zumindest dann vorhanden, wenn die Temperatur des Phasenwechselmaterials unterhalb der Temperatur liegt, bei der der Wechsel der Phase stattfindet. Dadurch wird die Batterie weiter verbessert vor übermäßiger Wärme geschützt. Auch werden nachteilhafte thermische Spannungen vermieden.

Der Spalt kann mit einem wärmeisolierenden Gas gefüllt sein. Im Spalt kann ein Vakuum vorliegen, um weiter verbessert thermisch zu isolieren. Die Wärmeisolierung kann durch eine solche Kombination aus Phasenwechselmaterial und Vakuum oder durch eine Kombination aus Phasenwechselmaterial und wärmeisolierendem Gas wie Argon oder Krypton besonders effektiv gebildet sein. Der dafür benötigte Bauraum kann dennoch schlank sein.

Vorzugsweise ist das Phasenwechselmaterial formstabilisiert. Dadurch kann sichergestellt werden, dass ein Abstand zwischen dem Gehäuse des Speisenthermometers und dem Phasenwechselmaterial zumindest dann vorhanden ist, wenn die Temperatur des Phasenwechselmaterials unterhalb der Temperatur liegt, bei der der Wechsel der Phase stattfindet.

Die Wärmeisolierung kann durch ein Verbundmaterial gebildet sein, dass das Phasenwechselmaterial umfasst. Das Phasenwechselmaterial kann so formstabilisiert sein. Das Phasenwechselmaterial kann gekapselt und dadurch formstabilisiert sein. Das Phasenwechselmaterial kann makroverkapselt oder mikroverkapselt sein. Das Phasenwechselmaterial kann beispielsweise von einer Folie umhüllt sein. Die Folie kann dehnbar sein, um Volumenänderungen des Phasenwechselmaterials gewachsen zu sein. Die Folie kann aus Kunststoff bestehen.

Das wärmeisolierende Material kann an der Batterie angeklebt worden sein. Die Batterie kann in eine Umhüllung aus wärmeisolierendem Material hineingeschoben worden sein. Die Umhüllung kann mit einem Deckel verschlossen worden sein. Im Anschluss daran können Batterie und Wärmeisolierung in das Gehäuse des Speisenthermometers gebracht worden sein.

Die Kapazität der Batterie sollte wenigstens 100 µAh, vorzugsweise wenigstens 500 µAh, betragen, um für die Zubereitung von Speisen hinreichend lange Betriebszeiten des Speisenthermometers erreichen zu können. Die Kapazität der Batterie sollte nicht mehr als 3 mAh, vorzugsweise nicht mehr als 2 mAh, betragen, um Durchmesser bei der Spitze des Speisenthermometers gering halten zu können.

Das Gehäuse des Speisenthermometers kann vollständig oder zumindest überwiegend aus Metall, vorzugsweise aus Edelstahl, bestehen. Das Gehäuse kann also so gut wärmeleitend sein, um schnell Temperaturen messen zu können. Das Gehäuse kann so den thermischen, chemischen und mechanischen Anforderungen gut gewachsen sein.

Es kann eine Box vorhanden sein, in der das Speisenthermometer thermisch geschützt gelagert werden kann. Eine im Wesentlichen konstante Lagertemperatur kann so sichergestellt werden. Die Box kann so ausgestaltet sein, dass diese als Ladegerät für die Batterie des Speisenthermometers dienen kann.

Um ein Speisenthermometer mit einer wärmeisolierten Batterie herzustellen, kann wärmeisolierendes Material in ein ein spitzes Ende umfassendes Gehäuseteil gebracht werden. Das wärmeisolierende Material kann erwärmt werden, so zum Beispiel auf eine Temperatur von wenigstens 40°C, 60°C oder 80°C. Die Batterie kann dann in das erwärmte wärmeisolierende Material hineingeschoben werden. Wird das wärmeisolierende Material danach abgekühlt, so kann sich dadurch ein Spalt zwischen dem wärmeisolierenden Material und dem Gehäuse bilden. Die Batterie kann innerhalb des Gehäuses durch mit der Batterie verbundene elektrische Leiter in einer gewünschten Position gehalten werden. Die elektrischen Leiter können durch eine Innenwand hindurchgeführt sein, um die Position der elektrischen Leiter innerhalb des Speisenthermometers zu fixieren. Die Innenwand kann so dazu beitragen, dass die Batterie gehalten wird.

Das wärmeisolierende Material kann eine Phasenwechselmaterial umfassen. Das für die Herstellung zu erwärmende wärmeisolierende Material kann ein Granulat sein, welches ein Phasenwechselmaterial umfasst.

Die Verwendung eines Phasenwechselmaterials ist besonders zu bevorzugen, weil dieses die Batterie auch vor übermäßig tiefen Temperaturen von beispielsweise weniger als 0°C besonders gut zu schützen vermag. Sollen mit dem Speisenthermometer Temperaturen von beispielsweise weniger als 10°C oder weniger als 0°C gemessen werden, so wird das Speisenthermometer vor dem Messen bevorzugt so lange auf eine Temperatur oberhalb der Phasenwechseltemperatur gebracht, bis das Phasenwechselmaterial zumindest überwiegend, vorzugsweise vollständig, seine Phase gewechselt hat. Wird im Anschluss daran eine tiefe Temperatur gemessen, so schützt das Phasenwechselmaterial die Batterie besonders gut vor Kälte.

Die Erfindung wird nachfolgend anhand von Beispielen näher erläutert, die durch Figuren dargestellt werden.

Es zeigen:
- Figur 1:: Speisenthermometer mit Batterie in einem doppelwandigen Gehäuse;
- Figur 2:: Speisenthermometer mit Batterie und Temperatursensor innerhalb einer Spitze;
- Figur 3:: Speisenthermometer mit Batterie und Innenwand;
- Figur 4:: Speisenthermometer mit Batterie und Phasenwechselmaterial;
- Figur 5:: Speisenthermometer mit Batterie in einem Gehäuse.

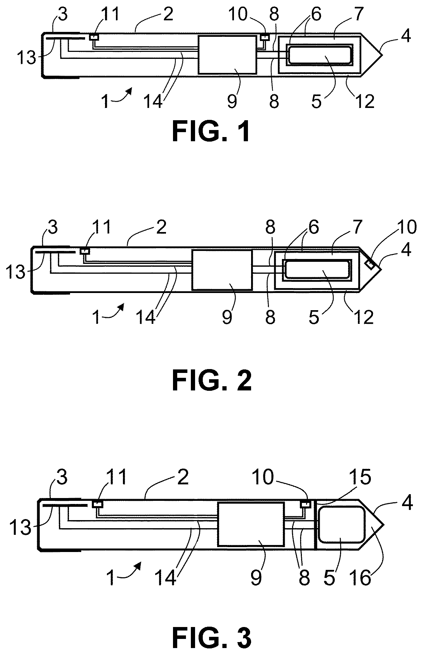

Die Figur 1 zeigt ein Speisenthermometer 1. Das Speisenthermometer 1 umfasst ein stiftförmiges Gehäuseteil 2 und eine Kappe 3. Das stiftförmige Gehäuseteil 2 ist ein Röhrchen, das an einem Ende durch eine Spitze 4 gasdicht verschlossen ist. Das stiftförmige Gehäuseteil 2 kann aus Metall, so zum Beispiel aus Edelstahl bestehen. Die Kappe 3 kann mit dem stiftförmigen Gehäuseteil 2 verschraubt und/oder verklebt sein kann. Die Kappe 3 kann aus Kunststoff bestehen, um als vor Hitze schützender Griff verwendet werden zu können. Eine Batterie 5 befindet sich bei der Spitze 4. Die Batterie 5 befindet sich innerhalb eines doppelwandigen Gehäuses 6. Der Zwischenraum 7 zwischen den beiden Wänden des doppelwandigen Gehäuses 6 kann mit Gas gefüllt sein, so zum Beispiel mit Argon oder Krypton. Im Zwischenraum 7 kann alternativ ein Vakuum herrschen. Es kann sich ein Phasenwechselmaterial im Zwischenraum 7 befinden. Die Temperatur, bei der die Phase wechselt, kann zwischen 40°C und 53°C liegen.

Das doppelwandige Gehäuse 6 kann an der Innenwand der Spitze 4 punktuell oder ringförmig anliegen und so an einem Ende gehalten sein. Zwei elektrische Leiter 8 können die Batterie 5 mit einer Elektronik 9 verbinden. Die Elektronik 2 befindet sich grundsätzlich außerhalb des doppelwandigen Gehäuses 6. Die beiden elektrischen Leiter 8 sind dann durch das doppelwandige Gehäuse 6 hindurchgeführt. Mithilfe der Elektronik 9 und der elektrischen Leiter 8 kann das andere Ende des doppelwandigen Gehäuses 6 gehalten sein. Ein mit der Elektronik 9 elektrisch verbundener erster Temperatursensor 10 kann angrenzend an das doppelwandige Gehäuse 6 an der Innenwand des stiftförmigen Gehäuseteils 2 befestigt sein. Mit diesem ersten Temperatursensor 10 kann die in einem Gargut herrschende Temperatur gemessen werden, wenn das Speisenthermometer 1 in Gargut hineingesteckt worden ist. Ein zweiter Temperatursensor 11 befindet sich bei der Kappe 3 und ist ebenfalls an der Innenwand des Gehäuses befestigt. Mit dem zweiten Temperatursensor 11 kann die in einem Garraum herrschende Temperatur gemessen werden.

Die Wärmespeicherfähigkeit von Temperatursensoren 10 und 11 ist möglichst klein, damit die Temperatursensoren 10 und 11 besonders schnell auf Temperaturänderungen reagieren können.

Zwischen dem doppelwandigen Gehäuse 6 und dem stiftförmigen Gehäuseteil 2 gibt es einen umlaufenden Spalt 12. Durch den Spalt 12 werden thermische Spannungen vermieden. Der Spalt 12 trägt dazu bei, die Batterie 5 vor Erwärmung zu schützen.

Es kann eine Spule 13 zum Beispiel bei der Kappe 3 vorhanden sein, über die die Batterie 5 induktiv aufgeladen werden kann. Die Spule 13 kann über elektrische Leiter 14 mit der Elektronik 9 verbunden sein. Alternativ können die elektrischen Leiter 14 mit elektrischen Kontakten verbunden sein, die von außen erreichbar sind. Ein Aufladen kann dann über die Kontakte erfolgen.

Die Elektronik 9 kann einen Mikrokontroller umfassen, mit dem die Temperatursensoren 10 und 11 ausgewertet werden können. Durch den Mikrokontroller kann das Aufladen der Batterie 5 gesteuert werden. Die Elektronik 9 kann eine Funkeinheit umfassen, über die das Speisenthermometer drahtlos Daten mit einem externen Gerät austauschen kann. Ein externes Gerät, das beispielsweise eine Küchenmaschine sein kann, kann so gemessene Temperaturen erhalten und einen Garvorgang in Abhängigkeit von den gemessenen Temperaturen steuern.

Der Durchmesser der Leiter 8 ist bevorzugt klein im Vergleich zu anderen elektrischen Leitern innerhalb des Speisenthermometers 1, so zum Beispiel klein im Vergleich zu den elektrischen Leitern 14. Es wird so ein Erwärmen der Batterie 5 über die elektrischen Leiter 8 vermieden.

Zwischen der Spitze 4 und der Batterie 5 gibt es nur eine Wärmeisolierung und folglich keine weiteren Komponenten. Der Abstand zwischen dem äußersten Ende der Spitze 4 und der Batterie kann weniger als 2 cm oder 1 cm betragen.

Die in der Figur 2 gezeigte Ausführungsform unterscheidet sich von der in der Figur 1 gezeigten Ausführungsform durch das Anordnen des ersten Temperatursensors 10 an einer Innenwand der Spitze 4. Zwischen der Spitze 4 und der Batterie 5 gibt es dann noch den ersten Temperatursensor 10, aber keine weiteren Komponenten.

In der Figur 3 wird eine Ausführungsform mit einer Innenwand 15 gezeigt. Die Innenwand 15 trennt einen Raum 16 bei der Spitze 4 gasdicht von dem übrigen Innenraum des Speisenthermometers 1. In dem Raum 16 befindet sich die Batterie 5 oder eine Batterie 5 mit auf der Oberfläche der Batterie 5 angebrachtem Phasenwechselmaterial. Das angebrachte Phasenwechselmaterial kann formstabilisiert sein. Das angebrachte Phasenwechselmaterial kann aufgeklebt worden sein. Ansonsten kann in dem Raum 16 ein Vakuum herrschen. Der Raum 16 kann mit einem wärmeisolierenden Gas gefüllt sein. Der Raum 16 kann aber auch vollständig mit einem Material gefüllt sein, das ein Phasenwechselmaterial umfasst oder das durch das Phasenwechselmaterial gebildet ist.

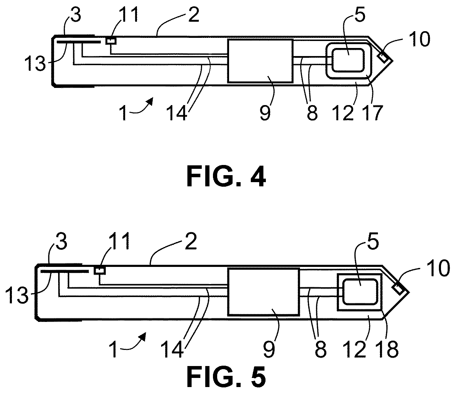

In der Figur 4 wird eine Ausführungsform gezeigt, bei der an die Batterie 5 ein formstabilisiertes Phasenwechselmaterial 17 angebracht ist. Dies kann geschehen sein, indem ein Bereich bei der Spitze 4 mit Phasenwechselmaterial 17 gefüllt und erwärmt worden ist. Im Anschluss daran wurde die Batterie in das Phasenwechselmaterial 17 eingetaucht. Durch Abkühlen hat sich das Phasenwechselmaterial 17 zusammengezogen und sich so von dem stiftförmigen Gehäuseteil 2 gelöst. Um das Lösen zu erleichtern, kann eine Folie vorhanden sein, die das Phasenwechselmaterial 17 von dem stiftförmigen Gehäuseteil 2 bei der Spitze 4 trennt.

In der Figur 5 wird eine Ausführungsform mit einem Gehäuse 18 gezeigt, in dem sich die Batterie 5 befindet. Die Batterie 5 weist einen Abstand zu den Wänden des Gehäuses 18 auf. Das Gehäuse 18 kann gasdicht sein, so dass in dem Gehäuse 18 ein Vakuum herrschen kann. In dem Gehäuse 18 kann alternativ ein wärmeisolierendes Gas oder ein Phasenwechselmaterial untergebracht sein. Das Gehäuse 18 kontaktiert vorzugsweise das stiftförmige Gehäuseteil 2 nicht, um verbessert vor Wärme zu schützen. Dies gilt vor allem dann, wenn sich im Gehäuse 18 ein Phasenwechselmaterial befindet. Das Gehäuse 18 kann zweiteilig sein und aus einem Behälter und einem Deckel gebildet sein.

## Patentansprüche

1. Speisenthermometer (1) mit einem Gehäuse (2, 3), das ein spitzes Ende (4) für eine Messung einer Temperatur in Inneren eines Garguts umfasst, mit einer innerhalb des Gehäuses (2, 3) befindlichen Batterie (5), die beim spitzen Ende des Speisenthermometers (1) angeordnet ist, wobei die Batterie (5) von einer Wärmeisolierung umhüllt ist, die sich zwischen dem Gehäuse und der Batterie (5) befindet, oder dass die Batterie zumindest zum Teil von einer Wärmeisolierung, die sich zwischen dem Gehäuse und der Batterie (5) befindet, abgedeckt wird, **dadurch gekennzeichnet, dass** die Batterie (5) sich in einem Raum (16) innerhalb des Speisenthermometers (1) befindet, in dem ein Vakuum herrscht oder der mit einem wärmeisolierenden Gas gefüllt ist, wobei das wärmeisolierende Gas Argon oder Krypton ist, oder dass die Wärmeisolierung ein Phasenwechselmaterial (17) umfasst.

2. Speisenthermometer (1) nach dem vorhergehenden Anspruch, **dadurch gekennzeichnet, dass** das Phasenwechselmaterial (17) einen Abstand zum Gehäuse des Speisenthermometers (1) aufweist.

3. Speisenthermometer (1) nach einem der zwei vorhergehenden Ansprüche, **dadurch gekennzeichnet, dass** das Phasenwechselmaterial (17) formstabilisiert ist.

4. Speisenthermometer (1) nach dem vorhergehenden Anspruch, **dadurch gekennzeichnet, dass** die Wärmeisolierung ein Verbundmaterial umfasst, das das Phasenwechselmaterial aufweist, oder dass das Phasenwechselmaterial gekapselt ist.

5. Speisenthermometer (1) nach einem der vorhergehenden Ansprüche, **dadurch gekennzeichnet, dass** wärmeisolierendes Material (17) an die Batterie (5) angeklebt oder die Batterie (5) in einer Umhüllung (17) aus wärmeisolierendem Material ist.

6. Speisenthermometer (1) nach einem der vorhergehenden Ansprüche, **dadurch gekennzeichnet, dass** die Wärmeisolierung aus einer Mehrzahl von Elementen gebildet oder dass die Wärmeisolierung gitterartig geformt ist.

7. Speisenthermometer (1) nach einem der vorhergehenden Ansprüche, **dadurch gekennzeichnet, dass** die Batterie (5) so ausgewählt ist, dass diese eine Kapazität von wenigstens 100µAh und/oder von nicht mehr als 3mAh hat.

8. Speisenthermometer (1) nach einem der vorhergehenden Ansprüche, **dadurch gekennzeichnet, dass** das Gehäuse (2, 3) vollständig oder zumindest überwiegend aus Metall, vorzugsweise aus Edelstahl, besteht.

9. Verfahren zur Herstellung eines Speisenthermometers (1) nach einem der vorhergehenden Ansprüche, **dadurch gekennzeichnet, dass** wärmeisolierendes Material in ein Gehäuseteil des Gehäuses des Speisenthermometers (1) gebracht und erwärmt wird, die Batterie (5) in das erwärmte wärmeisolierende Material hineingeschoben wird, und das wärmeisolierende Material abgekühlt wird, wobei das wärmeisolierende Material ein Phasenwechselmaterial ist.

10. Verfahren nach dem vorhergehenden Anspruch, **dadurch gekennzeichnet, dass** die Batterie (5) so gehalten wird, dass durch das Abkühlen sich das Phasenwechselmaterial zusammenzieht und so ein Spalt (12) zwischen dem wärmeisolierenden Material und dem Gehäuse entsteht.

11. Verfahren nach dem vorhergehenden Anspruch, **dadurch gekennzeichnet, dass** die Batterie (5) durch elektrische Leiter (8) gehalten wird.

12. Verfahren nach dem vorhergehenden Anspruch, **dadurch gekennzeichnet, dass** die elektrischen Leiter (8) durch eine Innenwand (15) hindurchgeführt werden.

13. Verfahren nach dem vorhergehenden Anspruch, **dadurch gekennzeichnet, dass** die Innenwand (15) dazu beiträgt, dass die Batterie (5) gehalten wird.

## Claims

1. Food thermometer (1) with a housing (2, 3) comprising a pointed end (4) for a measurement of a temperature inside a product to be cooked, with a battery (5) located inside the housing (2, 3) and arranged at the pointed end of the food thermometer (1), wherein the battery (5) is encased by a thermal insulation located between the housing and the battery (5), or that the battery is at least partially covered by a thermal insulation located between the housing and the battery (5), **characterized in that** the battery (5) is located in a space (16) inside the food thermometer (1) in which a vacuum prevails or which is filled with a thermally insulating gas, wherein the thermally insulating gas is argon or krypton, or that the thermal insulation comprises a phase change material (17).

2. Food thermometer (1) according to the preceding claim, **characterized in that** the phase change material (17) is spaced from the housing of the food thermometer (1).

3. Food thermometer (1) according to one of the two preceding claims, **characterized in that** the phase change material (17) is dimensionally stabilized.

4. Food thermometer (1) according to the preceding claim, **characterized in that** the thermal insulation comprises a composite material comprising the phase change material or that the phase change material is encapsulated.

5. Food thermometer (1) according to one of the preceding claims, **characterized in that** thermally insulating material (17) is bonded to the battery (5) or the battery (5) is in an enclosure (17) of thermal insulating material.

6. Food thermometer (1) according to one of the preceding claims, **characterized in that** the thermal insulation is formed of a plurality of elements or that the thermal insulation is lattice-shaped.

7. Food thermometer (1) according to one of the preceding claims, **characterized in that** the battery (5) is selected to have a capacity of at least 100µAh and/or of not more than 3mAh.

8. Food thermometer (1) according to one of the preceding claims, **characterized in that** the housing (2, 3) consists entirely or at least predominantly of metal, preferably stainless steel.

9. Method for manufacturing a food thermometer (1) according to one of the preceding claims, **characterized in that** thermally insulating material is brought into a housing part of the housing of the food thermometer (1) and heated, the battery (5) is pushed into the heated thermally insulating material, and the thermally insulating material is cooled, wherein the thermally insulating material is a phase change material.

10. Method according to the preceding claim, **characterized in that** the battery (5) is held in such a way that the cooling causes the phase change material to contract and, thus, a gap (12) is created between the thermally insulating material and the housing.

11. Method according to the preceding claim, **characterized in that** the battery (5) is held by electrical conductors (8).

12. Method according to the preceding claim, **characterized in that** the electrical conductors (8) are passed through an inner wall (15).

13. Method according to the preceding claim, **characterized in that** the inner wall (15) contributes to holding the battery (5).

## Revendications

1. Un thermomètre alimentaire (1), avec un boîtier (2, 3), qui comprend une extrémité pointue (4) pour mesurer une température à l'intérieur d'un aliment à cuire, avec une batterie (5), située à l'intérieur du boîtier (2, 3), qui est disposée à l'extrémité pointue du thermomètre alimentaire (1), où
la batterie (5) est enveloppée par une isolation thermique, qui se trouve entre le boîtier et la batterie (5), ou que la batterie est recouverte, au moins en partie, par une isolation thermique qui se trouve entre le boîtier et la batterie (5), **caractérisé en ce que** la batterie (5) se trouve dans un espace (16) à l'intérieur du thermomètre alimentaire (1), qui est rempli d'un vide ou qui est rempli d'un gaz isolant thermiquement, où le gaz isolant thermiquement est l'argon ou le krypton, ou que l'isolation thermique comprend un matériau à changement de phase (17).

2. Un thermomètre alimentaire (1) selon la revendication précédente, **caractérisé en ce que** le matériau à changement de phase (17) est à une distance du boîtier du thermomètre alimentaire (1).

3. Un thermomètre alimentaire (1) selon l'une des deux revendications précédentes, **caractérisé en ce que** le matériau à changement de phase (17) est stabilisé en forme.

4. Un thermomètre alimentaire (1) selon la revendication précédente, **caractérisé en ce que** l'isolation thermique comprend un matériau composite, qui comprend du matériau à changement de phase, ou que le matériau à changement de phase est encapsulé.

5. Un thermomètre alimentaire (1) selon l'une des revendications précédentes, **caractérisé en ce que** le matériau isolant thermiquement (17) est collé à la batterie (5), ou que la batterie (5) est dans une gaine (17) de matériau isolant thermiquement.

6. Un thermomètre alimentaire (1) selon l'une des revendications précédentes, **caractérisé en ce que** l'isolation thermique est faite d'une pluralité d'éléments ou que l'isolation thermique est formée de manière en treillis.

7. Un thermomètre alimentaire (1) selon l'une des revendications précédentes, **caractérisé en ce que** la batterie (5) est sélectionnée pour avoir une capacité d'au moins 100 µAh et/ou de pas plus de 3 mAh.

8. Un thermomètre alimentaire (1) selon l'une des revendications précédentes, **caractérisé en ce que** le boîtier (2, 3) est entièrement ou au moins majoritairement en métal, de préférence en acier inoxydable.

9. Un procédé de préparation d'un thermomètre alimentaire (1) selon l'une des revendications précédentes, **caractérisé en ce que** du matériau isolant thermiquement est placé dans une pièce de boîtier du boîtier du thermomètre alimentaire (1), et chauffé, la batterie (5) est poussée dans le matériau isolant thermiquement réchauffé, et le matériau isolant thermiquement est refroidi, où le matériau isolant thermiquement est un matériau à changement de phase.

10. Un procédé selon la revendication précédente, **caractérisé en ce que** la batterie (5) est maintenue de telle sorte que le matériau à changement de phase se contracte sous l'effet du refroidissement, et ainsi, un interstice (12) est créé entre le matériau isolant thermiquement et le boîtier.

11. Un procédé selon la revendication précédente, **caractérisé en ce que** la batterie (5) est maintenue par des conducteurs électriques (8).

12. Un procédé selon la revendication précédente, **caractérisé en ce que** les conducteurs électriques (8) passent à travers une paroi intérieure (15).

13. Un procédé selon la revendication précédente, **caractérisé en ce que** la paroi intérieure (15) contribue à maintenir la batterie (5).
